(19) Europäisches Patentamt
European Patent Office
Office européen des brevets

(11) Veröffentlichungsnummer: **0 437 786 A1**

# (12) EUROPÄISCHE PATENTANMELDUNG

(21) Anmeldenummer: **90124844.3**

(22) Anmeldetag: **20.12.90**

(51) Int. Cl.5: **C08L 77/00**, C08L 69/00, C08L 51/00, //(C08L77/00,69:00, 51:00),(C08L69/00,77:00,51:00)

(30) Priorität: **10.01.90 DE 4000479**

(43) Veröffentlichungstag der Anmeldung: **24.07.91 Patentblatt 91/30**

(84) Benannte Vertragsstaaten: **DE ES FR GB IT NL**

(71) Anmelder: **BAYER AG**

**W-5090 Leverkusen 1 Bayerwerk(DE)**

(72) Erfinder: **Horn, Klaus, Dr.**
**Bodelschwinghstrasse 12**
**W-4150 krefeld(DE)**
Erfinder: **Köhler, Burkhard, Dr.**
**Mündelheimer Strasse 94**
**W-4150 Krefeld 11(DE)**
Erfinder: **Dujardin, Ralf, Dr.**
**Bodelschwinghstrasse 18**
**W-4150 Krefeld(DE)**
Erfinder: **Fahnler, Friedrich**
**Wimmersweg 60**
**W-4150 Krefeld 1(DE)**

## (54) Ternäre Mischungen.

(57) Gegenstand der vorliegenden Erfindung sind Mischungen von Polyamiden mit Polycarbonaten und/oder mit Polyestercarbonaten und gegebenenfalls üblichen Additiven, die dadurch gekennzeichnet sind, daß sie säureanhydridgruppenhaltige Kautschuke enthalten, sowie ein Verfahren zur Herstellung der Mischungen.

EP 0 437 786 A1

## TERNÄRE MISCHUNGEN

Gegenstand der vorliegenden Erfindung sind Mischungen enthaltend

A) 30 Gew.-% bis 84 Gew.-%, vorzugsweise 40 Gew.-% bis 80 Gew.-% und insbesondere 50 Gew.-% bis 70 Gew.-% an teilkristallinen Polyamiden und

B) 70 Gew.−% bis 16 Gew.-%, vorzugsweise 60 Gew.-% bis 20 Gew.-% und insbesondere 50 Gew.-% bis 25 Gew.-% an thermoplastischen, aromatischen Polycarbonaten und/oder thermoplastischen, aromatischen Polyestercarbonaten, die dadurch gekennzeichnet sind, daß sie, bezogen auf die Gewichtssumme aus A) + B) von 100 Gew.-%,

C) 0,1 Gew.-% bis 40 Gew.-%, vorzugsweise von 0,2 Gew.-% bis 20 Gew.-%, und besonders bevorzugt von 0,3 Gew.-% bis 15 Gew.-% an säureanhydridgruppenhaltigen Kautschuken enthalten, welche Terpolymere aus $C_2$-$C_8$-Olefinen, aus Alkencarbonsäuren oder deren Estern und aus Maleinsäureanhydrid sind.

Die erfindungsgemäßen Mischungen neigen auch nach mehrmaliger thermoplastischer Verarbeitung weder zum Verschäumen noch zur Verfärbung.

Die Komponenten

Die Polyamidkomponente A) ist entweder ein Homopolyamid oder ein Copolyamid; es können auch Mischungen der Polyamide eingesetzt werden.

Teilkristallin bedeutet in diesen Zusammenhang, daß die Polyamide in der Differentialthermoanalyse eine definierte Glasübergangstemperatur und eine Schmelztemperatur zeigen.

Erfindungsgemäß einsetzbare Polyamide sind an sich bekannt und umfassen z.B. Polyamide mit Molekulargewichten von 5.000 oder mehr, wie sie z.B. in den US-Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure mit 4 bis 12 Kohlenstoffatomen, mit einem Diamin, welches 4 bis 14 Kohlenstoffatomen aufweist, hergestellt werden, oder durch Kondensation von ω-Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid(Nylon 612), die durch Ringöffnung von Lactam erhaltenen Polyamide, wie Polycaprolactam, Polylaurinsäurelactam, ferne Poly-11-aminoundecansäure und Di-(p-aminocyclohexyl)-methandodecandisäureamid. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200° C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1-%igen Lösung in m-Kresol bei 25° C, was einem Molekulargewicht $\overline{M}w$ von etwa 15.000 - 45.000 entspricht.

Die Polycarbonatkomponente B) ist sowohl ein Homocopolycarbonat als auch ein Copolycarbonat, wobei auch Mischungen von Polycarbonaten sowohl von Homopolycarbonaten als auch von Copolycarbonaten geeignet sind.

Die Polycarbonate gemäß Kompoente B) sollen Gewichtsmittelmolekulargewichte $\overline{M}_w$ (ermittelt beispielsweise in bekannter Weise über die relative Lösungsviskosität oder durch Gelchromatographie nach vorheriger Eichung) von 10.000 bis 200.000, vorzugsweise von 20.000 bis 80.000 haben.

Die Polycarbonate gemäß Komponente B) sind solche auf Basis der Diphenole der Formel a)

HO-D-OH a)

worin D ein zweibindiger aromatischer Rest von 6 bis 50 C-Atomen, insbesondere von 12 bis 45 C-Atomen, ist, der noch Heteroatome oder C-haltige Heterosegmente enthalten kann, welche nicht unter den 6 bis 50 C-Atomen subsummiert sind.

Die Polycarbonate haben somit bifunktionelle Struktureinheiten der Formel b)

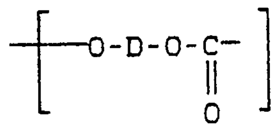

b)

worin D die vorstehend genannte Bedeutung hat.

Die Polycarbonate der Komponente B) können darüber hinaus in bekannter Weise (siehe beispielsweise DE-PS 2 500 092 und US-PS 4 185 009) durch den Einbau geringer Mengen, vorzugsweise zwischen 0,05 und 2 Mol%, bezogen auf eingesetzte Diphenole, an drei oder mehr als dreifunktionellen Verbindungen, beispielsweise solchen mit drei oder mehr als drei OH-Gruppen verzweigt sein.

Einige der verwendeten Verbindungen mit drei oder mehr als drei phenolischen Hydroxygruppen sind beispielsweise Phloroglucin, 4,6-Dimethyl-2,4,6-tri(4-hydroxyphenyl)-heptan, 1,3,5-Tri-(4-hydroxyphenol)-benzol, 1,1,1-Tri(-4-hydroxyphenyl)-ethan, 2,6-Bis-(2'-hydroxy-5'-methylbenzyl)-4-methylphenyl, 2-(4-hydroxyphenyl)-2-(2,4-dihydroxyphenyl)-propan und 1,4-Bis-(4,4'-dihydroxytriphenyl-methyl)-benzol. Einige der sonstigen dreifunktionellen Verbindungen sind 2,4-Dihydroxybenzoesäure, Trimesinsäure, Cyanuchlorid und 3,3-Bis-(4-hydroxy-3-methyl-phenyl )-2-oxo-2,3-dihydroindol.

Geeignete Diphenole der Formel a) sind beispielsweise solche der Formel a)1)

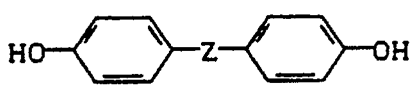

a)1)

worin Z eine Einfachbindung, ein Alkylen-Rest mit 1 bis 8 C-Atomen, ein Alkyliden-Rest mit 2 bis 12 C-Atomen, ein Cyclohexyliden-Rest, ein Benzyliden-Rest, ein Methyl-benzyliden-Rest, ein Bis-(phenyl)-methylen-Rest, -S-, $-SO_2-$, -CO- oder -O- ist.

Die Herstellung der Polycarbonate der Komponente B), beispielsweise aus den Diphenolen der Formel a)1) ist literaturbekannt oder nach literaturbekannten Verfahren herstellbar. (Siehe dazu beispielsweise H. Schnell, Chemistry and Physics of Polycarbonates, Interscience Publishers, New York, 1964 oder US-Patente 3 028 365 und 3 275 601).

Geeignete Diphenole der Formel a) sind beispielsweise auch solche der Formel a)2)

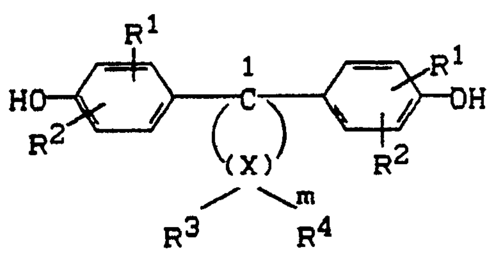

a)2)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 is 7, bevorzugt 4 oder 5, |
| $R^3$ und $R^4$, | für jedes X individuell wählbar, unabhängig voneinander Wasserstoff oder $C_1$-$C_6$-Alkyl und |
| x | Kohlenstoff bedeuten, |
| | mit der Maßgabe, daß an mindestens einem Atom X $R^3$ und $R^4$ gleichzeitig Alkyl bedeuten. |

Diese Diphenole sowie Polycarbonate daraus sind in der deutschen Patentanmeldung P 3 832 396.6 (Le A 26 344) beschrieben.

Beispiele für Diphenole der Formel a) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'-Bis(hydroxyphenyl)-diisopropylbenzole.

Diese und weitere geeignete Diphenole der Formel a) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518, in der Monographie "H. Schnell, Chemistry and Physics of Polycarbonates, Interscience Publishers, New York 1964" und in der deutschen Patentanmeldung P 3 832 396.6 (Le A 26 344) beschrieben.

Bevorzugte Diphenole der Formel a) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol und
1,1-Bis-(4-hydroxyphenyl)-3,3,5-trimethylcyclohexan.

Besonders bevorzugte Diphenole der Formel a) sind beispielsweise:
2,2-Bis-(4-hydroxyphenyl)-propan,
1,1-Bis-(4-hydroxyphenyl)-cyclohexan und
1,1-Bis-(4-hydroxyphenyl)-3,3,5-trimethylcyclohexan.

Insbesondere sind 2,2-Bis-(4-hydroxyphenyl)-propan und 1,1-Bis-(4-hydroxyphenyl)-3,3,5-trimethylcyclohexan bevorzugt.

Die Diphenole der Formel a) können sowohl einzeln als auch im Gemisch eingesetzt werden.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel c) geeignet

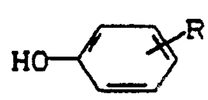

c)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20%. Die Kettenabbrecher werden im allgemeinen in Mengen von 0,5 bis 10, bevorzugt 1,5 is 8 Mol-%, bezogen auf eingesetzte Diphenole, eingesetzt.

Thermoplastische, aromatische Polyestercarbonate gemäß Komponente B) der vorliegenden Erfindung sind solche erhältlich in bekannter Weise an Diphenolen, Phosgen, aromatischen Dicarbonsäuredichloriden, Kettenabbrechern und gegebenenfalls Verzweigern. Geeignete Diphenole sind die für die Polycarbonatherstellung bereits genannten der Formel a).

Geeignete aromatische Dicarbonsäuredichloride sind Terephthalsäuredichlorid, Isophthalsäuredichlorid, o-Phthalsäuredichlorid, Diphenyl-dicarbonsäure-dichlorid, Naphthalindicarbonsäure-dichlorid und deren Gemische.

Bevorzugte Gemische sind solche von Terephthalsäuredichloriden mit Isophthalsäuredichloriden im verhältnis 20:1 bis 1:20, insbesondere von 7:3 bis 3:7.

Geeignete Kettenabbrecher sind beispielsweise Monophenole, wie sie auch für die Polycarbonat-Herstellung geeignet sind.

Geeignete Verzweiger sind die vorstehend für die Polycarbonat-Herstellung genannten drei oder mehr

als dreifunktionellen Verbindungen, wobei neben phenolischer Verbindung darüber hinaus auch aromatische Tricarbonsäurechloride oder aromatische Tetracarbonsäurechloride oder Säurechloride von noch höherwertigen, aromatischen Carbonsäuren eingesetzt werden können.

Sie werden in Mengen von 0,01 bis 1 Mol %, bezogen auf eingesetzte aromatische Dicarbonsäuredichloride, eingesetzt, während bei Einsatz von phenolischen Verzweigern deren Menge von 0,01 bis 1 Mol-% sich auf eingesetzte Diphenole zur Herstellung des aromatischen Polyestercarbonats bezieht.

Die aromatischen Polyestercarbonate im Sinne der vorliegenden Erfindung haben bis etwa 80 Mol-%, vorzugsweise bis etwa 50 Mol-% Carbonatgruppen, bezogen auf die Molsumme an Carbonatgruppen und aromatischen Carbonsäureestergruppen.

Sowohl der Ester- als auch der Carbonatanteil der erfindungsgemäßen aromatischen Polyestercarbonate kann in Form von Blöcken oder statistisch verteilt im Polykondensat vorliegen.

Die relative Lösungsviskosität ($\eta$rel) der aromatischen Polyestercarbonate liegt im Bereich 1,18 bis 1,4 vorzugsweise 1,22 bis 1,3 (gemessen an Lösungen von 0,5 g Polyestercarbonat in 100 ml $CH_2Cl_2$-Lösung bei 25° C).

Die Polyestercarbonatkomponente B) ist sowohl ein Homopolyestercarbonat als auch ein Copolyestercarbonat, also sowohl ein Polyestercarbonat auf Basis nur eines Diphenols als auch ein Polyestercarbonat auf Basis mehrerer Diphenole, sowohl ein Polyestercarbonat auf Basis nur einer aromatischen Dicarbonsäure als auch auf Basis mehrerer Dicarbonsäuren. Die Polyestercarbonate der Komponente B) sowie ihre Herstellung sind bekannt (siehe beispielsweise EP-OS 0 036 080 (Le A 20 203), DE-OS 3 007 934 (Le A 20 203) und US-PS 3 169 121) oder Gegenstand der deutschan Patentanmeldung P 3 903 103.9 (Le A 26 313).

Die erfindungsgemäß geeigneten Kautschuke gemäß Komponente C) sind beispielsweise Terpolymere, die aus

1) 55 Gew.-% bis 85 Gew.-% Ethylen, Propylen, Hexen, Butadien, Isopren oder/und Chloropren mit

2) 5 Gew.-% bis 40 Gew.-% Alkencarbonsäuren oder deren Estern und mit

3) 0,1 Gew.-% bis 40 Gew.-%, vorzugsweise 1 Gew.-% bis 20 Gew.-% und besonders bevorzugt 4 Gew.-% bis 17 Gew.-% Maleinsäureanhydrid nach allgemein bekannten Verfahren hergestellt werden können, wobei die Summe der Gew.-% der Komponenten 1) + 2) + 3) jeweils 100 Gew.-% ist.

Als Alkencarbonsäuren kommen alle derartigen Verbindungen in Frage, die mit den oben genannten Olefinen polymerisiert werden können, vorzugsweise $C_3$-$C_6$-Alkencarbonsäuren. Beispielsweise sind zu nennen: Acrylsäure, Methacrylsäure, Itaconsäure, Aconitsäure und/oder Fumarsäure. Besonders bevorzugt sind Acrylsäure und/oder Methacrylsäure.

Als Ester der Alkencarbonsäuren kommen Ester der oben genannten Alkencarbonsäuren von Alkoholen mit 1 bis 8 Kohlenstoffatomen in Frage. Besonders geeignet sind die Ester der Acrylsäure mit $C_1$-$C_8$-Alkoholen. Ganz besonders zeichnen sich die Ester der Acrylsäure mit Methanol, Ethanol oder 1-Butanol aus. Es können aber auch Mischungen aus verschiedenen $C_1$-$C_8$-Alkylestern von $C_3$-$C_6$-Alkencarbonsäuren verwendet werden.

Das Maleinsäureanhydrid kann entweder während der Synthese der Kautschuke als polymerbildender Baustein zugesetzt oder durch übliche Pfropfreaktion auf eine vorgebildete Kautschuk-Pfropfgrundlage polymerisiert werden.

Die Kautschuke der Komponente C) können nach allen bekannten Polymerisationsverfahren (Emulsions-, Lösungs-, Masse-, Suspensions-, Fällungspolmerisation) sowie nach Kombinationen aus diesen Verfahren hergestellt werden.

Bei der Herstellung der säureanhydridgruppenhaltigen Kautschuke durch Pfropfreaktion wird das aufzupfropfende Monomere in Gegenwart der vorgebildeten Propfgrundlage polymerisiert. Es bildet sich dabei neben dem eigentlichen Pfropfpolymerisat auch freies Homopolymerisat. Als Pfropfprodukte wird somit jeweils die Summe der eigentlichen Pfropfcopolymerisate und der freien Polymerisate verstanden. Die Menge des aufgepfropften Monomeren und das Molekulargewicht des Homopolymerisats kann in weiten Grenzen durch Variation der Polymerisationsbedingungen beeinflußt werden. Hierzu gehören vor allem: Art des Polymerisationsverfahrens, Temperatur, Aktivatorsystem, Molekulargewichtsregler, Rührbedingungen und Art der Monomer-Dosierung.

Besonders bevorzugte Terpolymerisate gemäß Komponente C) sind solche, die hergestellt sind aus

1) 55 Gew.-% bis 85 Gew.-% Ethylen,

2) 5 Gew.-% bis 40 Gew.-% eines oder mehrerer $C_3$-$C_6$-Alkencarbonsäuren und/oder deren Ester und

3) 0,1 Gew.-% bis 40 Gew.-%, vorzugsweise 1 Gew.-% bis 20 Gew.-% und besonders bevorzugt 4 Gew.-% bis 17 Gew.-% Maleinsäureanhydrid, wobei die Summe der Gew.-% der Komponenten 1) + 2) + 3) jeweils 100 Gew.-% ist.

Die erfindungsgemäß einzusetzenden Kautschuke sollen im wesentlichen unvernetzt sein, d.h. sie sollen

zu mindestens 90 % in heißen Lösungsmitteln wie z.B. Toluol, Ethylbenzol oder Tetrachlorethylen löslich sein. Die Kautschuke besitzen Schmelzpunkte von 40 bis 160 °C, vorzugsweise von 60 bis 150 °C. Die Schmelzpunkte wurden nach der DSC-Methode (Differential-Scanning-Calorimeter-Methode) bestimmt.

Die Vicat-Temperaturen der erfindungsgemäß einzusetzenden Kautschuke liegen im Bereich zwischen 30 °C bis 110 °C, vorzugsweise 35 °C bis 90 °C, gemessen nach DIN 53 460.

Stand der Technik

Aus der japanischen Offenlegungsschrift 73/28 350 (Priorität 13.5.1970) sind Polyamid-Polycarbonat-Mischungen beschrieben, wobei die Menge an Polycarbonat 0,5 bis 20 %, vorzugsweise 1,0 bis 10 %, bezogen auf Polyamid beträgt. Aus diesen Mischungen werden Schaumstoffe hergestellt.

Aus der SU-PS 540 895 sind Mischungen von Polyamiden (85 bis 99 Gew.-%) mit Polycarbonaten (15 bis 1 Gew.-%) bekannt.

Aus der japanischen Offenlegungschrift 57/016 033 (Priorität 2.7.1980) sind verschäumbare Mischungen von Polycarbonaten mit carboxylgruppenhaltigen Polymeren in Mengen von 1-40 Gew.-% bekannt, wobei mindestens ein Teil der Carboxylgruppen mit Na oder K neutralisiert ist. Die Mischungen können außerdem Polyamide oder Polyolefine in 0,1 bis 100-fachen Menge bezogen auf die Gewichtssumme an Polycarbonat und carboxylgrupppenhaltigen Polymeren enthalten.

Aus der japanischen Offenlegungsschrift 59/68 368 (Priorität 14.10.1982) sind Polycarbonat-Polyamid-Mischungen bekannt, die pro 100 Teile Polycarbonat 1 bis 80 Teile Polyamid enthalten. Die Mischungen haben verbesserte chemische Resistenz und verbesserten Schmelzfluß.

Die verringerte Schmelzviskosität ist wahrscheinlich eine Folge des Abbaus des Polycarbonats.

Aus der deutschen Offenlegungsschrift 3 605 573 (Priorität 21.2.1986) sind Polyamid-Polycarbonat-Mischungen bekannt, die einen Gehalt vonm 0,1 bis 30 Gew.-% an Polymeren mit Protonendonatorgruppen -OH, die Wasserstoffbrückenbindungen ausbilden können, haben. Die Formmassen sollen gute Oberflächenbeschaffenheit und gute Schlagzähigkeit, besonders in der Kälte, besitzen.

Aus der EP-OS 0 270 809 (Priorität 8.12.1986) sind neue Säureanhydrid-Endgruppen-haltige Polycarbonate bekannt, die vorzugsweise mit Polyamiden abgemischt werden.

Derartige säureanhydridendgruppenhaltigen Polycarbonate müssen über OH-Gruppen terminierte Polycarbonate, also ohne Kettenregler, synthetisiert werden.

Somit ist eine technisch nutzbare, reproduzierbare Herstellungsmethode für diese Polycarbonate nicht gegeben.

Darüber hinaus wird in der EP-OS 0 270 809, Seite 13, Absatz 2 ausgeführt, daß trotz dieses Endgruppenschutzes die Polycarbonate im Gemisch mit den Polyamiden einen Molekulargewichtsabbau erleiden.

Überraschenderweise wurde gefunden, daß der Molekulargewichtsabbau des Polycarbonats beziehungsweise des Polyestercarbonats und die damit verbundene Zersetzungsreaktion unter $CO_2$-Bildung dann unterbleibt, wenn ein Polyamid, welches mit einem säureanhydridhaltigem Kautschuk schmelzcompoundiert ist, mit dem Polycarbonat und/oder mit dem Polyestercarbonat verarbeitet wird.

Der Effekt ist umso überraschender, da hier nur statistisch eingesetzte Säureahydridgruppen vorliegen. Die erfindungsgemäße Vorgehensweise erlaubt außerdem, polyamidreichere Polyamid/Polycarbonat-Gemische als gemäß EP-A 0 270 809 herzustellen.

Schließlich sind aus der EP-OS 0 301 234 (Priorität 27.7.1987) Polycarbonat-Polyamid-Mischungen, beziehungsweise Polyestercarbonat-Polyamid-Mischungen, bekannt, die als dritte Komponente ein Polyamid-Polyether-Blockcopolymer enthalten, um die Schlagzähigkeit zu verbessern.

Auch in diesem Fall müssen die Aminendgruppen der Polyamide so reduziert werden, damit das Molekulargewicht der Polycarbonate bzw. der Polyestercarbonate und damit die Schlagzähigkeit der Mischungen stabil bleibt (Seite 7, Zeilen 22 ff der EP-OS 0 301 234).

Als Polyamide sind auch modifizierte Polyamide geeignet, wobei in diesem Zusammenhang auf die US-Patente 4 174 358, 4 474 927, 4 346 194, 3 884 882 und 4 147 740 verwiesen wird (Seite 9, Seiten 33 ff der EP-A 0 301 234). Die Modifizierung der Polyamide erfolgt hierbei durch den Zusatz von Polymerisaten, worunter auch Säureanhydridgruppen-haltige Polymerisate fallen (siehe US-Patent 4 174 358, Spalte 6, Zeilen 18 ff, US-Patent 4 346 194, Komponente (b)1), Spalte 2, Zeilen 18 ff und US-Patent 4 147 740, Beispiel 1).

In der EP-A 0 301 234 können die Mischungen aus Polycarbonat und Polyamid, beziehungsweise aus Polyestercarbonat und Polyamid in beliebigen Mengenverhältnissen vorliegen (Seite 9, letzter Absatz bis Seite 10, 1. Absatz der EP-A 0 301 234).

Die speziellen Terpolymeren gemäß Komponente C) der vorliegenden Erfindung sind unseres Erachtens jedoch in diesem Zusammenhang nicht erwähnt.

Die Herstellung der erfindungsgemäßen Mischungen aus den Komponenten A), B) und C) erfolgt in der Weise, daß man getrocknetes Polyamid der Komponente A) mit dem säureanhydridgruppenhaltigen Kautschuk der Komponente C) schmelzcompoundiert wird. Dieser Blend wird nach Trocknung mit dem Polycarbonat und/oder mit dem Polyestercarbonat der Komponente B) schmelzcompoundiert.

Für diese Herstellung der erfindungsgemäßen Mischungen können die üblichen Zweiwellenextruder, vorzugsweise solche mit Entgasung, verwendet werden.

Die Schmelzcompoundierung sowohl in der ersten als auch in der zweiten Stufe wird zwischen 250 °C und 320 °C, vorzugsweise zwischen 270 °C und 300 °C durchgeführt.

Gegenstand der vorliegenden Erfindung ist somit auch ein Verfahren zur Herstellung der erfindungsgemäßen Mischungen aus den Komponenten A), B) und C), das dadurch gekennzeichnet ist, daß man in der ersten Stufe getrocknetes Polyamid gemäß Komponente A) innerhalb des erfindungsgemäßen Mengenbereichs mit dem säureanhydridgruppenhaltigen Kautschuk gemäß Komponente C) innerhalb des erfindungsgemäßen Mengenbereichs bei Temperaturen zwischen 250 °C und 320 °C, vorzugsweise zwischen 270 °C und 300 °C schmelzcompoundiert, danach das erhaltene Gemisch trocknet, und dann in einer zweiten Stufe mit dem Polycarbonat und/oder mit dem Polyestercarbonat gemäß Komponente B) innerhalb des erfindungsgemäßen Mengenbereichs wiederum bei Temperaturen zwischen 250 °C und 320 °C, vorzugsweise zwischen 270 °C und 300 °C schmelzcompoundiert und das erhaltene Gemisch anschließend in bekannter Weise abkühlt und granuliert.

Den erfindungsgemäßen Mischungen können noch die für die Komponenten A), B) und C) bekannten Additive in bekannten Mengen vor oder während oder nach der Herstellung der erfindungsgemäßen Mischungen in den für die Komponenten A), B) oder C) üblichen Mengen eingearbeitet werden.

Geeignete Additive sind Weichmacher, Fließmittel, Stabilisatoren gegen UV-Licht, Hitze, Feuchtigkeit und gegen $O_2$-Einwirkung, Pigmente und Flammschutzmittel.

Geeignete Stabilisatoren sind insbesondere Calciumsulfate, die entweder wasserfrei, 0,5 Mol $H_2O$ oder 2 Mol $H_2O$ pro Mol $CaSO_4$ enthalten können. Die Calciumsulfate werden gegebenenfalls in Mengen bis zu 25 Gew.-%, bezogen auf 100 Gew.-% aus A) + B) + C), vorzugsweise in Mengen bis zu 20 Gew.-% und insbesondere in Mengen von 1 Gew.% bis 10 Gew.-% eingesetzt.

Gegenstand der vorliegenden Erfindung sind somit auch Mischungen bestehend aus den erfindungsgemäßen Komponenten A), B) und C) und mindestens einem Zusatz, ausgewählt aus Weichmachern Fließmitteln, Stabilisatoren, Pigmenten und Flammschutzmitteln.

Gegenstand der vorliegenden Erfindung ist auch ein Verfahren zur Herstellung der erfindungsgemäßen Mischungen, bestehend aus den erfindungsgemäßen Komponenten A), B) und C) und mindestens einem Zusatz, ausgewählt aus Weichmachern, Fließmitteln, Stabilisatoren, Pigmenten und Flammschutzmitteln, das dadurch gekennzeichnet ist, daß man vor oder während oder nach der Herstellung der erfindungsgemäßen Mischungen aus den Komponenten A), B) und C) mindestens einen der genannten Zusätze in den für die Komponenten A), B) oder C) üblichen Mengen in bekannter Weise einarbeitet.

Die erfindungsgemäßen Mischungen können, in bekannter Weise zu Formkörpern verarbeitet werden, ebenso zu Folien oder Fasern, indem man sie beispielsweise auf Spritzgußmaschinen zu verschiedenen Formkörpern verspritzt.

Die erfindungsgemäßen Mischungen finden Anwendung überall dort, wo Formkörper aus Polyamid eingesetzt werden, wo jedoch eine verbesserte Zähigkeit und Wärmeformbeständigkeit verlangt wird, also beispielsweise im Automobilbereich.

## Beispiel 1

In einem Zweiwellen-Extruder wurden

A) 5,28 kg handelsübliches Polyamid-6,

und

C) 1,32 kg eines bekannten Polyethylen-Acrylsäureester-Maleinsäureanhydrid-Terpolymeren, hergestellt nach bekannten Verfahren im Gewichtsverhältnis 70 Gew.-% Ethylen zu 19 Gew.-% Acrylsäureester zu 11 Gew.-% Maleinsäureanhydrid, das einen Schmelzpunkt von 112 °C hat,

bei 235 °C innerhalb einer Stunde schmelzcompoundiert.

Das erhaltene Gemisch wurde abgesponnen und granuliert. Das erhaltene Granulat wurde einen Tag bei 120 °C in einem Vakuum-Trockenschrank getrocknet.

## Beispiel 2

5,74 kg des getrockneten Granulats vom Beispiel 1 und

B) 2,46 kg vorgetrocknetes Homopolycarbonat aus 2,2-Bis-(4-hydroxyphenyl)-propan mit einem $\eta_{rel}$ von 1,28, gemessen in $CH_2Cl_2$ bei 25° C und einer Konzentration von 0,5 g in 100 ml $CH_2Cl_2$ und mit einem $\overline{M}w$ von etwa 28.000, gelchromatographisch ermittelt, wurden bei 280° C schmelzcompoundiert in einem Zweiwellenextruder innerhalb einer Stunde.

Das erhaltene Gemisch wurde abgesponnen und granuliert. Nach dem Trocknen des Granulats wurden weiße Formkörper durch Spritzguß erhalten.

Vergleichsbeispiel 1

Beispiel 2 wurde wiederholt, wobei allerdings anstelle von 5,74 kg Granulat des Beispiels 1 9 kg Polyamid-6 des Beispiels 1 und 1 kg Polycarbonat des Beispiels 2 innerhalb einer Stunde bei 280° C in dem Zweiwellen-Extruder schmelzcompoundiert wurden. Das erhaltene Granulat ist gelb gefärbt.

Vergleichsbeispiel 2

Entsprechend Vergleichsbeispiel 1 wurden 3 kg des Polycarbonats mit 2 kg des Polyamids vermicht und granuliert. Man erhält eine gelb gefärbte, in kaltem Zustand spröde Masse, die nicht als Strang abgesponnen werden konnte und auch nicht zu Formkörpern im Spritzgußverfahren verarbeitet werden konnte.

**Patentansprüche**

1. Mischungen enthaltend
   A) 30 Gew.-% bis 84 Gew.-% an teilkristallinen Polyamiden,
   B) 70 Gew.-% bis 16 Gew.-% an thermoplastischen, aromatischen Polycarbonaten, und/oder thermoplastischen, aromatischen Polyestercarbonaten, dadurch gekennzeichnet, daß sie, bezogen auf die Gewichtssumme A) + B) von 100 Gew.-%,
   C) 0,1 Gew.-% bis 40 Gew.-% an säureanhydridgruppenhaltigen Kautschuken enthalten, welche Terpolymere aus $C_2$-$C_8$-Olefinen, aus Alkencarbonsäuren oder deren Estern und aus Maleinsäureanhydrid sind.

2. Verfahren zur Herstellung der Mischungen des Anspruchs 1, dadurch gekennzeichnet, daß man in der ersten Stufe getrocknetes Polyamid gemäß Komponente A) mit dem säureanhydridgruppenhaltigen Kautschuk gemäß Komponente C) bei Temperaturen zwischen 250° C und 320° C schmelzcompoundiert, danach das erhaltene Gemisch trocknet, und dann in einer zweiten Stufe mit Polycarbonat und/oder mit dem Polyestercarbonat gemäß Komponente B) wiederum bei Temperaturen zwischen 250° C und 320° C schmelzcompoundiert und das erhaltene Gemisch anschließend in bekannter Weise abkühlt und granuliert.

3. Mischungen gemäß Anspruch 1, bestehend aus den Komponenten A), B) und C) und mindestens einem Zusatz, ausgewählt aus Weichmachern, Fließmitteln, Stabilisatoren, Pigmenten und Flammschutzmitteln.

4. Verfahren zur Herstellung der Mischungen des Anspruchs 3 gemäß Anspruch 2, dadurch gekennzeichnet, daß man vor oder während oder nach der Herstellung der Mischungen aus den Komponenten A), B) und C) mindestens einen Zusatz, ausgewählt aus Weichmachern, Fließmitteln, Stabilisatoren, Pigmenten und Flammschutzmitteln in der für die Komponenten A), B) oder C) üblichen Mengen in bekannter Weise einarbeitet.

Europäisches Patentamt

# EUROPÄISCHER RECHERCHENBERICHT

Nummer der Anmeldung

**EP 90 12 4844**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 802 387 (DEXTER)<br>* Ansprüche *<br>— — — | 1-4 | C 08 L<br>77/00<br>C 08 L 69/00<br>C 08 L 51/00 //<br>(C 08 L 77/00<br>C 08 L 69:00<br>C 08 L 51:00 )<br>(C 08 L 69/00<br>C 08<br>L 77:00<br>C 08 L 51:00 ) |
| X,Y | EP-A-0 285 693 (GENERAL ELECTRIC)<br>* Ansprüche; Seite 9, Zeilen 13-27 *<br>— — — | 1-4 | |
| Y | EP-A-0 333 002 (IDEMITSU)<br>* Patentanprüche *<br>— — — | 1-4 | |
| Y | EP-A-0 269 984 (BASF)<br>* Ansprüche *<br>— — — | 1-4 | |
| Y | PATENT ABSTRACTS OF JAPAN, Band 14, Nr. 096 (C-692)[4039], 22. Februar 1990;<br>& JP-A-1 304 154 (KANEBO) 07-12-1989<br>— — — — — | 1-4 | **RECHERCHIERTE SACHGEBIETE (Int. Cl.5)**<br>C 08 L |

Der vorliegende Recherchenbericht wurde für alle Patentansprüche erstellt

| Recherchenort | Abschlußdatum der Recherche | Prüfer |
|---|---|---|
| Den Haag | 16 April 91 | LEROY ALAIN |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument